# EUROPÄISCHE PATENTSCHRIFT

(11) **EP 3 947 125 B1**
(45) Veröffentlichungstag und Bekanntmachung des Hinweises auf die Patenterteilung: **15.03.2023**
(21) Anmeldenummer: 20714969.1
(22) Anmeldetag: 23.03.2020
(51) Int. Cl.: B62J 43/28, B62K 19/30, B62J 43/13, B62M 6/90, B60K 1/04

(54) **VERRIEGELUNGSEINRICHTUNG ZUR VERRIEGELUNG EINER ENERGIEVERSORGUNGSEINHEIT AN EINEM FAHRRAD**
LOCKING DEVICE FOR LOCKING AN ENERGY SUPPLY UNIT TO A BICYCLE
DISPOSITIF DE VERROUILLAGE POUR LE VERROUILLAGE D'UNE UNITÉ D'ALIMENTATION EN ÉNERGIE SUR UN VÉLO

(30) Priorität: 01.04.2019 DE 102019204572
(43) Veröffentlichungstag der Anmeldung: 09.02.2022
(73) Patentinhaber: Brose Antriebstechnik GmbH & Co. Kommanditgesellschaft, Berlin, 10553 Berlin (DE)
(72) Erfinder: BOCK, Michael, 13587 Berlin (DE); HEINZ, Markus, 13597 Berlin (DE)
(74) Vertreter: Maikowski & Ninnemann Patentanwälte Partnerschaft mbB
(86) Internationale Anmeldenummer: PCT/EP2020/057929
(87) Internationale Veröffentlichungsnummer: WO 2020/200865

(56) Entgegenhaltungen:
- EP-A1- 2 230 164
- DE-A1-102018 006 690
- DE-B3-102016 213 903
- DE-U1-202016 104 156

## Beschreibung

Die vorgeschlagene Lösung betrifft eine Verriegelungseinrichtung zur Verriegelung einer Energieversorgungseinheit für ein Fahrrad.

Verriegelungseinrichtungen zur Verriegelung einer Energieversorgungseinheit, zum Beispiel mit einem Akkumulator (kurz: Akku), sind im Zusammenhang mit Fahrrädern weithin bekannt. Insbesondere im Zusammenhang mit Elektrofahrrädern, insbesondere sogenannten Pedelecs, wird zur Versorgung eines oder mehrerer Elektromotoren des Fahrrads für den elektromotorisch unterstützten Antrieb des Fahrrads eine Energieversorgungseinheit benötigt. Die Energieversorgungseinheit ist hierbei dann beispielsweise an einem Halteelement des Fahrradrahmens als Teil der Verriegelungseinrichtung festzulegen, kann bei geöffneter Verriegelungseinrichtung aber entfernt werden, beispielsweise um einen Akku der Energieversorgungseinheit aufzuladen.

Typischerweise sind Energieversorgungseinheiten für Elektrofahrräder mit einem Akku an einem Unterrohr als Halteelement über ein Schloss einer Verriegelungseinrichtung gesichert. Um bei einer Entriegelung des Schlosses ein Herausfallen oder Abfallen der Energieversorgungseinheit von dem Fahrradrahmen zu verhindern, ist dann häufig eine zweistufige Entriegelung vorgesehen. Die Verriegelungseinrichtung ist hierfür eingerichtet, die Energieversorgungseinheit nicht nur an dem Halteelement in einer Verriegelungsposition zu verriegeln, sondern auch für eine Trennung der Energieversorgungseinheit von dem Halteelement eine Verlagerung der Energieversorgungseinheit aus der Verriegelungsposition in eine Zwischenposition zu gestatten, in der die Energieversorgungseinheit weiterhin über mindestens ein Verriegelungselement der Verriegelungseinrichtung an dem Halteelement gehalten ist, und die in der Zwischenposition befindliche Energieversorgungseinheit freizugeben, wenn die Energieversorgungseinheit tatsächlich von dem Halteelement getrennt werden soll.

Eine derartige Verriegelungseinrichtung ist beispielsweise aus der DE 20 2016 104 156 U1 bekannt, welche die Präambel des Anspruchs 1 zeigt.

Die hier vorgeschlagene Verriegelungseinrichtung umfasst ein Schloss, über das eine Energieversorgungseinheit mit einem Akku in einer Verriegelungsposition verriegelt werden kann. Wird das Schloss geöffnet, kann die Energieversorgungseinheiten bis zu einer Zwischenposition geschwenkt werden, wobei über ein Verriegelungselement in Form eines federnd gelagerten Sperrriegels ein vollständiges Herausklappen der Energieversorgungseinheit verhindert ist. Erst durch Verstellung des Verriegelungselements kann dann die Energieversorgungseinheit vollständig entfernt werden. Zum Trennen der Energieversorgungseinheit von dem rahmenseitigen Halteelement, zum Beispiel in Form eines Unterrohres, muss ein Nutzer folglich sowohl das Schloss als auch das Verriegelungselement betätigen, wodurch eine zweistufige Entriegelung bereitgestellt ist.

Weitere Verriegelungsvorrichtungen für Energieversorgungseinheiten für Fahrräder sind in den Dokumenten DE 10 2018 006 690 A1, EP 2 230 164 A1 und DE 10 2016 213 903 B3 beschrieben.

Bisher bekannte Verriegelungseinrichtungen für Energieversorgungseinheiten für Fahrräder und insbesondere Elektrofahrräder gestatten jedoch häufig keine zufriedenstellende Fixierung der Energieversorgungseinheit in der Verriegelungsposition, wenn es sich beispielsweise um ein sportliches Fahrradmodell, insbesondere ein Mountainbike handelt. So ist beispielsweise gerade im Mountainbike-Bereich bei einer sogenannten Downhill-Fahrt sicherzustellen, dass sich die Energieversorgungseinheit nicht unerwünscht von dem Halteelement löst oder Klappergeräusche verursacht, auch wenn teilweise harte Stöße von dem Fahrradrahmen aufzunehmen sind und die Energieversorgungseinheit starken Beschleunigungskräften ausgesetzt ist. Bisher werden für derartige Anwendungsfälle komplexe Verriegelungseinrichtungen eingesetzt, die die Energieversorgungseinheit zwar ausreichend sicher an dem Halteelement festlegen, jedoch regelmäßig keine besonders benutzerfreundliche Entnahme der Energieversorgungseinheit von einem rahmenseitigen Halteelement gestatten.

Vor diesem Hintergrund liegt der vorgeschlagenen Lösung der Aufgabe zugrunde, eine in dieser Hinsicht verbesserte Verriegelungseinrichtung bereitzustellen.

Diese Aufgabe ist mit einer Verriegelungseinrichtung des Anspruchs 1 gelöst.

Hierbei ist eine Verriegelungseinrichtung mit einer zweistufigen Entriegelung für eine Energieversorgungseinheit vorgeschlagen, die ein zwischen einer Spannlage und einer Freigabelage verstellbares Führungselement aufweist. Über dieses Führungselement ist in seiner Spannlage entlang einer Spannrichtung eine Spannkraft auf die in einer Verriegelungsposition befindliche Energieversorgungseinheit aufbringbar. Das Führungselement ist somit eingerichtet und vorgesehen, in seiner Spannlage auf die in der Verriegelungsposition befindliche Energieversorgungseinheit eine Spannkraft aufzubringen und diese Spannkraft mittelbar oder unmittelbar auf die Energieversorgungseinheit auszuüben. Ferner ermöglicht das Führungselement mit einer Verstellung aus seiner Spannlage in eine Freigabelage eine Verlagerung der Energieversorgungseinheit aus der Verriegelungsposition in eine Zwischenposition, in der die Energieversorgungseinheit über mindestens ein Verriegelungselement der Verriegelungseinrichtung weiterhin an dem Halteelement gehalten ist. Die mit der Verstellung in die Freigabelage durch das Führungselement ermöglichte Verlagerung der Energieversorgungseinheit erfolgt hierbei entlang einer unter einem Winkel zu der Spannrichtung verlaufenden Verlagerungsrichtung.

Über das Führungselement ist somit eine Spannkraft auf die Energieversorgungseinheit ausübbar, um die Energieversorgungseinheit an dem Halteelement in der Verriegelungsposition zu verspannen und damit (stärker) gegen Relativbewegungen gesichert an dem Halteelement festzulegen. Über das Führungselement wird folglich beim Verriegeln der Energieversorgungseinheit an dem Halteelement und der damit einhergehenden Verstellung des Führungselement in seine Spannlage die Energieversorgungseinheit mit einer Spannkraft beaufschlagt ist. Über die Verstellbarkeit des Führungselements zwischen der Spannlage und der Freigabelage ist dabei aber dennoch eine zweistufige Entriegelung bereitgestellt, sodass die Energieversorgungseinheit erst mit der Verstellung des Führungselements in seiner Freigabelage in die Zwischenposition verlagert werden kann, aus der die Energieversorgungseinheit wiederum erst durch eine zusätzliche Aktion des Nutzers von dem Halteelement getrennt werden kann. Diese zusätzliche Aktion des Nutzers kann beispielsweise zur Verstellung des Verriegelungselements der Verriegelungseinrichtung und/oder zur Verstellung eines mit dem Verriegelungselement zusammenwirkenden Gegenstücks an der Energieversorgungseinheit führen. Das Verriegelungselement ist beispielsweise Teil eines Schlosses der Verriegelungseinrichtung.

Die Spannrichtung und die Verlagerungsrichtung können unter einem Winkel von größer 20° zueinander verlaufen. Beispielsweise ist über das in seiner Spannlage vorliegende Führungselement eine Spannkraft entlang einer Spannrichtung aufbringbar, die Wesentlichen parallel zu einer Längserstreckungsrichtung verläuft, entlang der sich die Energieversorgungseinheit in ihrer Verriegelungsposition erstreckt. Die Verlagerungsrichtung, entlang der sich die Energieversorgungseinheit, zum Beispiel unter der Wirkung der Schwerkraft oder durch eine manuell aufgebrachte Kraft eines Nutzers, aus der Verriegelungsposition in die Zwischenposition verlagern kann, verläuft dann beispielsweise im Wesentlichen quer zu der Längserstreckungsrichtung der Energieversorgungseinheit. Beispielsweise weist die Verlagerungsrichtung an einem Fahrrad dann in Richtung des Bodens, wenn hier an einem Unterrohr des Fahrradrahmens die Energieversorgungseinheit nach unten entnehmbar sein soll.

Das Führungselement ist in einer Ausführungsvariante zwischen seiner Spannlage und seiner Freigabelage kulissengeführt verstellbar. Es ist folglich mindestens eine Kulissenführung vorgesehen, die die Verstellbahn für eine Verstellung des Führungselements zwischen der Spannlage und der Freigabelage vorgibt. Beispielsweise ist hierbei ein Abschnitt des Führungselements an einer Führungskulisse gehalten, die dem Führungselement die Verstellbahn für die Verstellung zwischen der Spannlage und der Freigabelage vorgibt.

Die Freigabelage des Führungselements kann grundsätzlich durch ein (gegebenenfalls an einem Fahrradrahmen vorgesehenes und mithin rahmenfestes) Anschlagelement vorgegeben sein, über das hinweg das Führungselement nicht weiter in eine erste Verstellrichtung verstellbar ist. Vielmehr ist das Führungselement ausgehend von dem Anschlagelement dann allenfalls zurück in Richtung der Spannlage entlang einer zweiten, entgegengesetzten Verstellrichtung verstellbar.

Die Führungskulisse für das Führungselement kann beispielsweise an einem Kulissenbauteil ausgebildet sein, das an der Energieversorgungseinheit fixierbar ist. Beispielsweise ist ein Kulissenbauteil der Verriegelungseinrichtung drehfest an einer Stirnseite der Energieversorgungseinheit fixierbar. Bei dem Kulissenbauteil handelt es sich somit an beispielsweise um ein separates Bauteil der Verriegelungseinrichtung, das an der Energieversorgungseinheit fixiert wird, beispielsweise über mindestens eine Schraubverbindung. In einer Ausführungsvariante ist das Kulissenbauteil als Kappe ausgeführt, die an einer Stirnseite einer einen Akku aufweisenden Energieversorgungseinheit fixiert wird und eine Führungskulisse für das Zusammenwirken mit dem Führungselement der Verriegelungseinrichtung ausbildet.

Für das (Vor-) Spannen der Energieversorgungseinheit in der Verriegelungsposition kann die Führungskulisse beispielsweise eine rampenartig verlaufende Führungsfläche aufweisen, über die, bei einer Führung des Abschnitts des Führungselements an der Führungsfläche entlang, die Spannkraft auf die Energieversorgungseinheit erzeugbar ist. Bei einer Verstellung des Führungselements in die Spannlage drängt dann beispielsweise das an der rampenartig ansteigend verlaufenden Führungsfläche entlang geführte und senkrecht zu der Führungsfläche nicht verlagerbare Führungselement das die Führungsfläche aufweisende (und mit der Energieversorgungseinheit verbundene oder hieran ausgebildete) Kulissenbauteil in die Spannrichtung. An der rampenartig verlaufenden Führungsfläche stützt sich beispielsweise ein an der Führungskulisse gehaltener Abschnitt des Führungselements zumindest dann ab, wenn das Führungselement zwischen seiner Spannlage und seiner Freigabelage verstellt wird. Über die Verstellbewegung des in Richtung seiner Spannlage verstellten Führungselements wird somit die Spannkraft auf die Energieversorgungseinheit ausgeübt. Derart geht beispielsweise bei einem verstellbar gelagerten Führungselement mit einer Schwenkbewegung des Führungselements in Richtung seiner Spannlage die Erzeugung einer Spannkraft auf die Energieversorgungseinheit einher, indem ein Abschnitt des Führungselements an der rampenartig ansteigend verlaufenden Führungsfläche der Führungskulisse entlang geführt wird.

In einer Ausführungsvariante weist die Führungskulisse einen L-förmigen Verlauf auf. Hierbei sind zueinander unter einem Winkel verlaufende Kulissenabschnitte der Führungskulisse beispielsweise einerseits der Freigabelage und andererseits der Spannlage zugeordnet. Mit anderen Worten liegt das Führungselement mit einem an der Führungskulisse gehaltenen Abschnitt entweder in dem einen oder dem anderen Kulissenabschnitt vor, je nachdem, ob sich das Führungselement in seiner Spannlage oder seiner Freigabelage befindet.

In einer Ausführungsvariante definiert die Führungskulisse einen Führungskanal, in den der an der Führungskulisse gehaltene Abschnitt des Führungselements eingreift und der einen in einer Längserstreckungsrichtung des Führungskanals offenen Endbereich aufweist, an dem der Abschnitt des Führungselements in die Führungskulisse einführbar ist. Über den offenen Endbereich des Führungskanals kann somit der Abschnitt des Führungselements in Eingriff mit dem Führungskanal und damit der Führungskulisse gebracht werden, wenn die Energieversorgungseinheit an das Halteelement angesetzt und in Richtung seiner Verriegelungsposition verlagert, insbesondere geschwenkt wird. Über den offenen Endbereich ist ferner auch ermöglicht, dass der Abschnitt des Führungselements, der bei an dem Halteelement festgelegter Energieversorgungseinheit an der Führungskulisse gehalten ist, mit der Führungskulisse außer Eingriff gebracht und die an der Energieversorgungseinheit vorgesehene Führungskulisse von dem Führungselement abgezogen werden kann, wenn die Energieversorgungseinheit von dem Halteelement getrennt wird.

An dem Führungselement kann ein Betätigungselement vorgesehen sein, dass für die Einleitung einer Verstellkraft in das Führungselement für die Verstellung des Führungselements zwischen der Spannlage und der Freigabelage vorgesehen ist. Beispielsweise ist über das Betätigungselement eine manuell aufgebrachte Verstellkraft in das Führungselement einleitbar, sodass ein Nutzer das Führungselement zwischen der Spannlage und der Freigabelage verstellen und damit die Energieversorgungseinheit verriegeln und vorspannen oder umgekehrt zur Entnahme freigeben kann.

In diesem Zusammenhang kann beispielsweise auch vorgesehen sein, dass das Betätigungselement an dem Führungselement verstellbar, insbesondere schwenkbar gelagert ist. Das Betätigungselement kann beispielsweise zwischen einer Gebrauchslage und einer Nichtgebrauchslage verstellbar sein. Insbesondere kann vorgesehen sein, dass das Betätigungselement in seiner Nichtgebrauchslage zusätzlich als Sperre für eine Verlagerung der Energieversorgungseinheit in die Verlagerungsrichtung wirkt. In der Nichtgebrauchslage erstreckt sich dann beispielsweise das Betätigungselement zumindest teilweise an der in der Verriegelungsposition vorliegenden Energieversorgungseinheit entlang, sodass ein Abschnitt des Betätigungselements von der Energieversorgungseinheit aus gesehen in der Verlagerungsrichtung liegt und damit einer Verlagerung der Energieversorgungseinheit in die Verlagerungsrichtung entgegenwirkt. In einer Gebrauchslage des Betätigungselements stellt das Betätigungselement dann beispielsweise einen Griffbereich für die Hand eines Nutzers bereit, um über Einleitung einer manuell aufgebrachten Verstellkraft das Betätigungselement und damit das Führungselement zu verstellen. Beispielsweise bildet hierfür das Betätigungselement einen Betätigungshebel mit einem Griffbereich aus.

In einer Ausführungsvariante kann ein schwenkbar an dem Führungselement gelagertes Betätigungselement nur in der Spannlage des Führungselements zwischen seiner Gebrauchslage und seiner Nichtgebrauchslage verstellbar, insbesondere zwischen seiner Gebrauchslage und seiner Nichtgebrauchslage schwenkbar und damit ausklappbar und einklappbar sein. In einer Freigabelage des Führungselements ist somit beispielsweise das Betätigungselement gegen ein Schwenken in eine Nichtgebrauchslage gesperrt. Hierüber kann die Bediensicherheit für den Nutzer erhöht sein, da das Betätigungselement nicht eingeklappt werden kann, wenn nicht zuvor hierüber auch das Führungselement zurück in die Spannlage verstellt wurde.

Das Führungselement ist in einer Ausführungsvariante über mindestens ein Federelement in Richtung seiner Freigabelage vorgespannt. Über das mindestens eine Federelement ist somit beispielsweise auch ein an dem Führungselement vorgesehenes Betätigungselement in eine korrespondierende (Öffnungs-) Lage vorgespannt. Über die mithilfe des mindestens einen Federelements aufgebrachte Vorspannung ist beispielsweise sichergestellt, dass ein in einer Führungskulisse gehaltener Abschnitt des Führungselements an demjenigen Kulissenabschnitt der Führungskulisse vorliegt, der an dem Führungselement entlang verschoben werden kann, wenn die die Führungskulisse aufweisende Energieversorgungseinheit von dem Halteelement getrennt wird. Wurde folglich das Führungselement unterstützt über das mindestens eine Federelement in die Freigabelage verstellt, verbleibt das Führungselement in dieser Freigabelage, sodass die Energieversorgungseinheit über das Führungselement nicht an einem Trennen von dem Halteelement gehindert ist. Vielmehr kann dann beispielsweise eine an der Energieversorgungseinheit stirnseitig vorgesehene Führungskulisse an dem Führungselement entlang verschoben werden, wenn über die Verriegelungseinrichtung eine Verlagerung der Energieversorgungseinheit aus der Zwischenposition freigegeben ist.

Im Rahmen der vorgeschlagenen Lösung ist auch ein Fahrradrahmen für ein Fahrrad, insbesondere an Elektrofahrrad vorgesehen, der ein Ausführungsbeispiel einer vorgeschlagenen Verriegelungseinrichtung sowie eine Energieversorgungseinheit, die einem Halteelement des Fahrradrahmens festgelegt ist, aufweist.

Darüber hinaus ist ein Elektrofahrrad mit einer Ausführungsvariante einer vorgeschlagenen Verriegelungseinrichtung vorgesehen.

Die beigefügten Figuren veranschaulichen exemplarisch mögliche Ausführungsvarianten der vorgeschlagenen Lösung.

Hierbei zeigen:
- Figur 1: ausschnittsweise und in perspektivischer Ansicht ein Ausführungsbeispiel einer vorgeschlagenen Verriegelungseinrichtung mit einer einen Akkumulator (kurz: Akku) aufweisenden Energieversorgungseinheit in einer Verriegelungsposition an einem Halteelement in Form eines Unterrohrs eines Fahrradrahmens;
- Figuren 2A-2B: in verschiedenen Ansichten die Verriegelungseinrichtung der Figur 1 mit einem Führungselement in einer Freigabelage und der Energieversorgungseinheit in einer Zwischenposition;
- Figuren 3A-3C: in Einzeldarstellung die Verriegelungseinrichtung ohne das Unterrohr und mit einem als Akkukappe ausgebildeten Kulissenbauteil, das an der Energieversorgungseinheit zu fixieren ist, in unterschiedlichen Phasen einer Verstellung des Führungselements ausgehend von einer Spannlage der Figur 3A zu einer Freigabelage der Figur 3C;
- Figur 4A: in vergrößertem Maßstab das Führungselement mit Blick auf ein Federelement zum Vorspannen des Führungselements in seine Freigabelage und auf einen Lagerabschnitt des Führungselements, an dem ein Betätigungselement in Form eines Betätigungshebels angelenkt ist;
- Figur 4B: in vergrößertem Maßstab und in Seitenansicht das Führungselement in seiner Freigabelage, in der es an einem Anschlagelement der Verriegelungseinrichtung anliegt;
- Figur 5: eine Explosionsdarstellung des Führungselements und der Akkukappe der Verriegelungseinrichtung zusammen mit einem Lagerelement für die schwenkbare Lagerung des Führungselements;
- Figur 6: eine Draufsicht auf die Akkukappe in ihrem an der Energieversorgungseinheit fixierten Zustand;
- Figur 7: in Seitenansicht einen Fahrradrahmen aus dem Stand der Technik, der ein Halteelement in Form eines Unterrohres mit hieran festgelegtem Akku aufweist, der in der Figur 7 in einer von einer Verriegelungseinrichtung bereits getrennten Entnahmeanlage dargestellt ist.

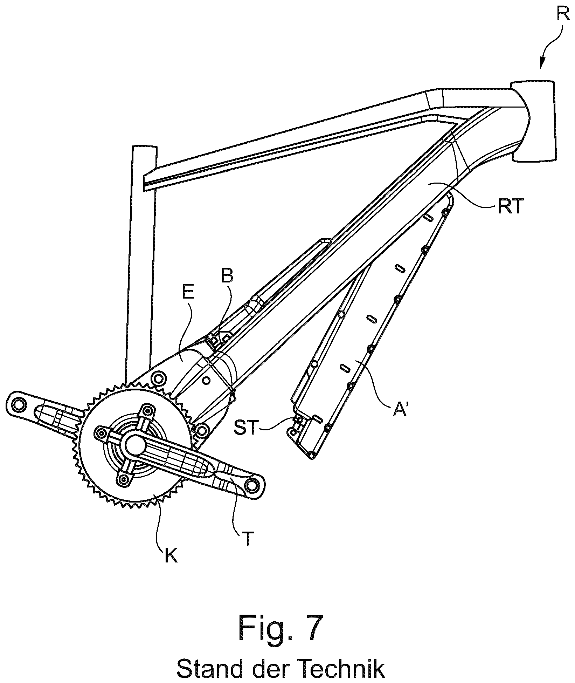

Die Figur 7 zeigt eine aus dem Stand der Technik bekannte Ausführung eines Fahrradrahmens R für ein Elektrofahrrad. Der Fahrradrahmen R weist mehrere miteinander verbundene Rahmenrohre auf, hierunter insbesondere ein Halteelement in Form eines Unterrohrs RT. Insbesondere an diesem Unterrohr RT ist ein Gehäuse eines Elektromotors E fixiert. Mit diesem Elektromotor E ist ein Kettenblatt K gekoppelt, das zusätzlich auch über eine Tretlagerkurbel T angetrieben werden kann.

Für die Versorgung des Elektromotors E mit elektrischer Energie ist eine Energieversorgungseinheit A' mit einem Akku vorgesehen. Der Akku ist gegebenenfalls mit weiteren elektronischen Komponenten innerhalb eines Gehäuses der Energieversorgungseinheit A' untergebracht. Im Folgenden wird der Einfachheit halber die Energieversorgungseinheit A' mit dem Akku gleichgesetzt.

Der Akku A' ist vorliegende an dem Unterrohr RT befestigt. Hierbei kann der längserstreckte Akku A' an einem von dem Elektromotor E abgewandten Ende des Unterrohrs RT in eine Aufnahme des Unterrohrs RT eingeschoben oder eingesteckt werden. Über das eingeschobene oder eingesteckte Ende des Akkus A' kann dann das vordere Ende des Akkus A' in die an der Unterseite des Rohres RT ausgebildete Aufnahme eingeklappt werden. An dem einzuklappenden Ende des Akkus A' ist ein akkuseitiger Steckverbinder in Form eines Anschlusssteckers ST vorgesehen. Dieser akkuseitige Steckverbinder ST ist an einem innerhalb der Aufnahme des Unterrohrs RT vorgesehenen motorseitigen Steckverbinder gesteckt, wenn der Akku A' bestimmungsgemäß vollständig in die Aufnahme des Unterrohres RT eingeklappt und hierin aufgenommen ist.

Zum Lösen des Akkus A' von dem Unterrohr RT ist an der Oberseite des Unterrohrs RT ein Betätigungsgriff B vorgesehen. Wird dieser Betätigungsgriff B betätigt, gibt eine an dem Unterrohr RT integrierte Verriegelungseinrichtung den Akku A' frei, sodass dieser nach unten, d. h. zum Boden hin, von einem Nutzer heraus geklappt und entnommen werden kann.

Bei einer aus dem Stand der Technik bekannten Verriegelungseinrichtung, wie sie bei einem Fahrradrahmen R der Figur 7 zum Einsatz kommt, muss der Akku A' mit einer Hand gehalten werden, wenn der Betätigungsgriff B betätigt wird, um ein Herausfallen des Akkus A' aus dem Unterrohr RT zu verhindern. Dies reduziert den Bedienungskomfort bei einer Entnahme des Akkus A' erheblich. Im Übrigen ist die dargestellte Konstruktion nur bedingt für Elektrofahrräder geeignet, die ausdrücklich für Fahrten vorgesehen sind, bei denen der Fahrradrahmen R erheblichen Stößen ausgesetzt ist, wie zum Beispiel sogenannten Downhill-Fahrten bei Mountainbikes.

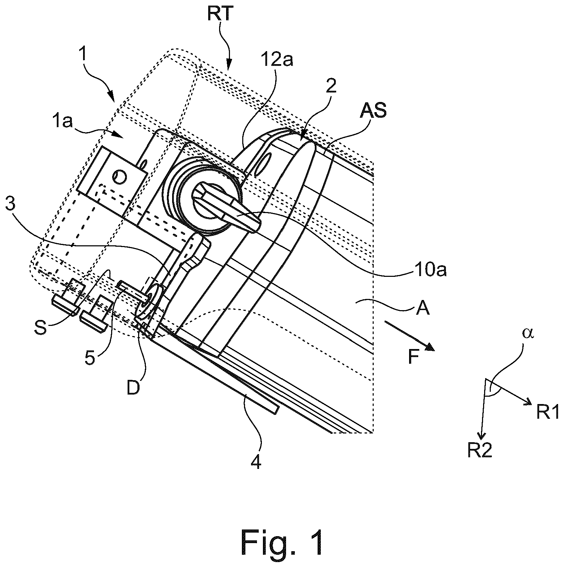

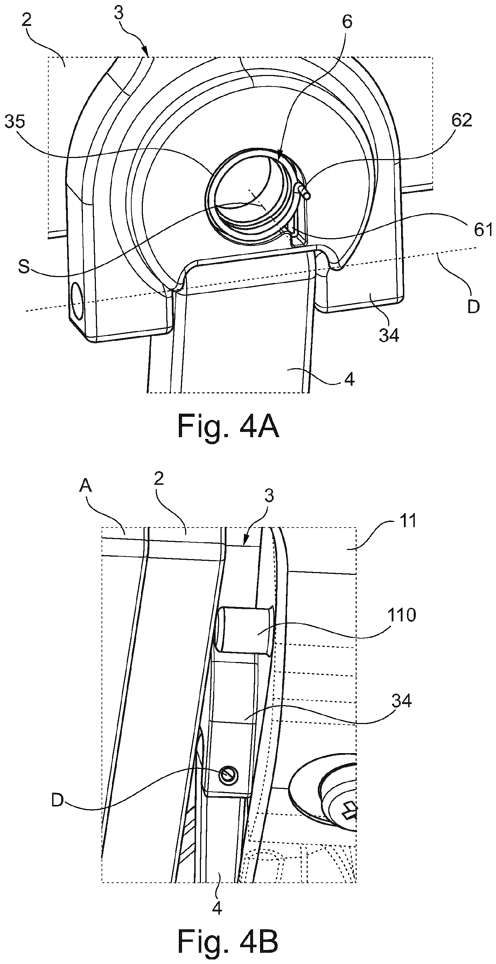

In dieser Hinsicht schafft die vorgeschlagene Lösung Abhilfe, zu der mit den Figuren 1 bis 6 eine Ausführungsvariante näher veranschaulicht ist.

Die vorgeschlagene Lösung sieht hierbei eine Verriegelungseinrichtung 1 vor, über die eine zweistufige Endregelung für die Entnahme einer einen Akku A aufweisende Energieversorgungseinheit an einem Elektrofahrrad realisiert ist. Bei der in den Figuren 1 bis 6 dargestellten Variante ist der Akku A an einem unteren, d.h. kettenblattnahen Bereich des Unterrohres RT verschwenkbar gelagert. In einem oberen Bereich des Unterrohres RT ist die Verriegelungseinrichtung 1 mit einer Schlosseinheit 1a vorgesehen, um den bestimmungsgemäß in einer Aufnahme des Unterrohres RT eingeklappten Akku A an dem Unterrohr RT zu verriegeln. Über die Schlosseinheit 1a ist hierbei der Akku A an dem Unterrohr RT gesichert und kann ohne Einstecken und Drehen eines passenden Schlüssels 10a nicht von dem Unterrohr RT getrennt werden.

In einer in der Figur 1 dargestellten Verriegelungsposition des Akkus A ist der Akku A entlang in Längserstreckungsrichtung des Akkus A weisenden Spannrichtung R1 mit einer Vorspannkraft F beaufschlagt. Über diese Vorspannkraft F ist der Akku A in Längsrichtung beaufschlagt, sodass der Akku A sicher an dem Unterrohr RT verspannt gehalten wird. Hierdurch können Bewegungen des Akkus A selbst bei harten Stößen auf den Fahrradrahmen R stark eingeschränkt oder sogar gänzlich unterbunden werden.

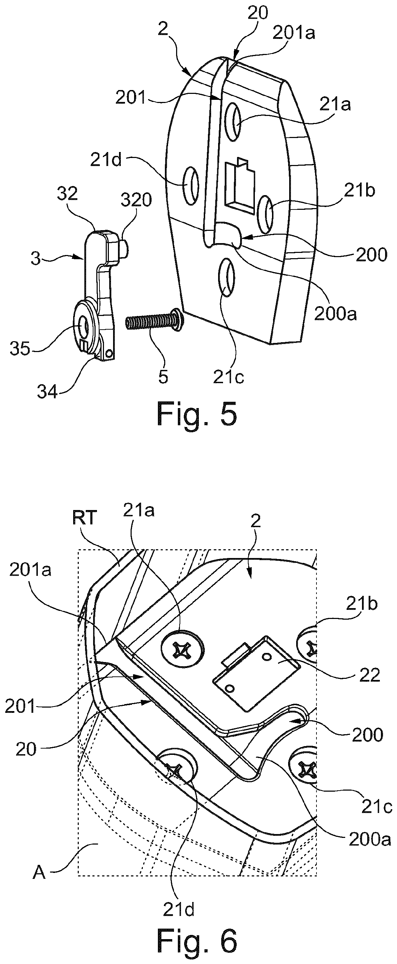

Die Vorspannkraft F ist über das Zusammenwirken eines Führungselements 3 der Verriegelungseinrichtung 1 mit einem Kulissenbauteil in Form einer Akkukappe 2 der Verriegelungseinrichtung 1 erreicht. Das Zusammenwirken des Führungselements 3 und der Akkukappe 2 stellt hierbei ferner auch eine zweistufige Entriegelung des Akkus A sicher, wenn dieser von dem Unterrohr RT entfernt werden soll. Die Akkukappe 2 ist als separates Bauteil ausgebildet und an einer Stirnseite AS des Akkus A drehfest fixiert. Für die Fixierung an der Stirnseite AS des Akkus A sind an der Akkukappe 2 beispielsweise mehrere Befestigungsstellen in Form von Befestigungslöchern 21a bis 21d für Befestigungsschrauben ausgebildet (vergleiche insbesondere Figuren 5 und 6).

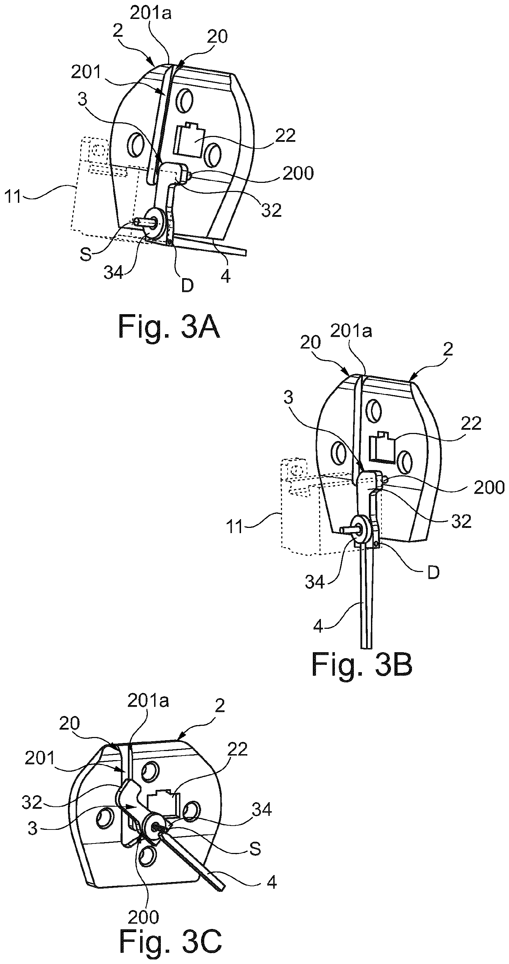

Wie aus der Zusammenschau der Figuren 1 bis 6 und insbesondere den Figuren 3A bis 3C ersichtlich ist, ist das nach Art eines L-förmigen Hebels ausgestaltete Führungselement 3 über ein Lagerelement in Form einer Lagerschraube 5 an einem unterrohrfesten Lagerteil 11 der Verriegelungseinrichtung 1 um eine Schwenkachse S schwenkbar gelagert. Das Führungselement 3 liegt dabei zum Beispiel vollständig innerhalb des Unterrohrs RT vor. Das Führungselement 3 ist über einen Führungsabschnitt 32 an der Lagerschraube 5 schwenkbar gelagert. An einem zu dem Lagerabschnitt 34 beabstandeten Führungsabschnitt 32 ist an dem Führungselement 3 ein Führungszapfen 320 ausgebildet, der verschieblich in einer Führungskulisse 20 der Akkukappe 2 gehalten ist, insbesondere wenn der Akku A in seiner Verriegelungsposition an dem Unterrohr RT vorliegt.

Die Führungskulisse 20 der Akkukappe 2 ist vorliegend L-förmig ausgebildet und weist neben einem längserstreckten (zweiten) Kulissenabschnitt 201 mit einem nach außen offenen Endbereich 201a einen hiervon abgewinkelten, kürzeren weiteren (ersten) Kulissenabschnitt 200 mit einer rampenartig verlaufenden Führungsfläche 200a auf (vergleiche insbesondere Figur 6). Die beiden Kulissenabschnitte 200 und 201 der Führungskulisse 20 definieren einen L-förmigen Führungskanal, in dem der Führungszapfen 320 des Führungselements 3 verschieblich geführt werden kann.

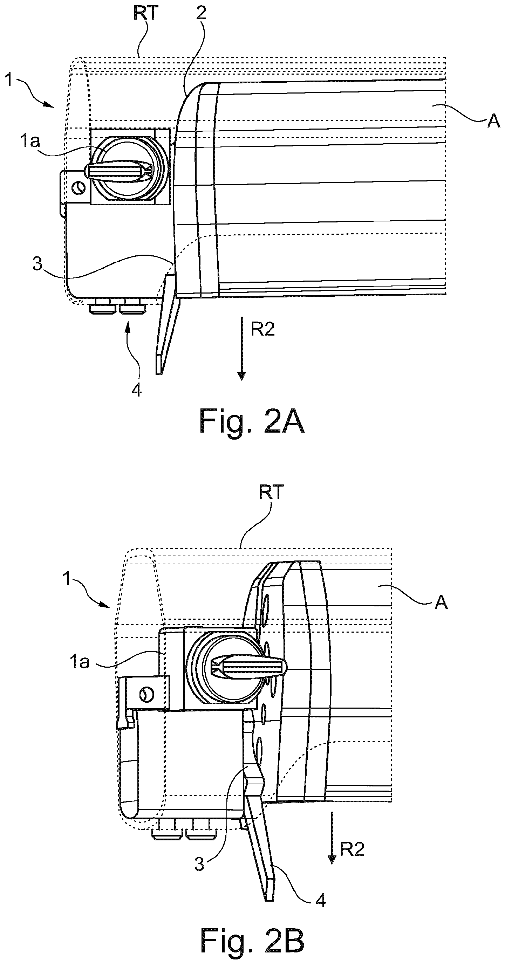

In der Verriegelungsposition des Akkus A liegt der Führungszapfen 320 an einem stirnseitig am weitesten vorstehenden Ende der Führungsfläche 200a des Kulissenabschnitts 200 an und drückt damit den Akku A in die Spannrichtung R1 und belastet den Akku A damit mit der Vorspannkraft F. Wird das Führungselement 3 aus dieser derart definierten Spannlage durch Drehung um die Schwenkachse S an der Führungskulisse 20 entlang in eine in der Figur 3C dargestellte Freigabelage geschwenkt, gleitet der Führungszapfen 320 an der Führungsfläche 200a entlang in Richtung des anderen Kulissenabschnitts 201. Durch die Führung des Führungszapfens 320 an der dann rampenartig abfallenden Führungsfläche 200 nimmt die Vorspannkraft F ab. Durch Verlagerung des Führungszapfens 320 in Richtung des anderen, zweiten Kulissenabschnitt 201 wird ferner ein Schwenken des Akku A entlang einer Verlagerungsrichtung R2 an dem der Verriegelungseinrichtung 1 zugewandten Stirnseite AS um wenige Grad, zum Beispiel um 1°, in eine Zwischenposition gestattet, die den Figuren 2A und 2B dargestellt ist.

Die Verlagerungsrichtung R2 verläuft hierbei unter einem Winkel α zu der parallel zur Längserstreckungsrichtung des Akkus A verlaufenden Spannrichtung R1 und ist beispielsweise durch die an dem Akku A angreifende Schwerkraft vorgegeben, wenn die Verriegelungseinrichtung 1 bestimmungsgemäß an einem Fahrradrahmen R eines Elektrofahrrads montiert ist.

Um das Führungselement 3 um seine Schwenkachse S leichter manuell verschwenken zu können, ist an dem Lagerabschnitt 34 des Führungselements 3 ein Betätigungselement in Form eines Betätigungshebel 4 angelenkt. Der Lagerabschnitt 34 definiert hierbei eine Hebelschwenkachse D, um die der Betätigungshebel 4 an dem Führungselement 3 schwenkbar gelagert ist. Die Hebelschwenkachse D verläuft vorliegend exemplarisch senkrecht zu der Schwenkachse S des Führungselements 3. In der Spannlage des Führungselements 3 und der damit einhergehenden Verriegelungsposition des Akkus A kann der Betätigungshebel 4 eingeklappt an einer Unterseite des Unterrohrs RT vorliegen, sodass durch den Betätigungshebel 4 eine zusätzliche Sperre und damit Absicherung des Akkus A gegen ein unerwünschtes Herausklappen bereitgestellt ist.

Um das Führungselement 3 aus seiner Spannlage in die Freigabelage zu überführen, wird der Betätigungshebel 4 entsprechend der Figur 3B um seine Hebelschwenkachse D geschwenkt, sodass der Betätigungshebel 4 einen unterhalb des Unterrohres RT vorstehenden Griffbereich für einen Nutzer bereitstellt. Durch Drücken oder Ziehen an dem Betätigungshebel 4 kann dann das Führungselement 3 um seine Schwenkachse S aus der Spannlage in die Freigabelage geschwenkt werden. Bei dieser Verstellung wird der Führungszapfen 320 an der akkuseitigen Führungskulisse 20 an der rampenartig verlaufenden Führungsfläche 200a entlang in den zweiten Kulissenabschnitt 201 verschoben, bis das Führungselement 3 an einem lagerteilseitigen Anschlagelement in Form eines Anschlagzapfens 110 anschlägt und damit eine weitere Schwenkbewegung des Führungselements 3 um die Schwenkachse S verhindert ist.

Über ein Federelement in Form einer Schenkelfeder 6 ist das Führungselement 3 in Richtung seiner Freigabelage vorgespannt. Wird folglich über den Betätigungshebel 4 eine Verstellkraft eingeleitet, um das Führungselement 3 in Richtung seiner Freigabelage zu verstellenden, hält die Schenkelfeder 6 das Führungselement 3 in der Freigabelage und damit den hiermit verbundenen Betätigungshebel 4 in einer korrespondierenden Öffnungslage, in der das Führungselement 3 an dem Anschlagszapfen 110 anliegt. Die Schenkelfeder 6 stützt sich hierfür über ein erstes Federende 61 an dem Führungselement 3 und über ein zweites Federende 62 an dem Lagerteil 11 ab, sodass die Schenkelfeder 6 in Richtung der Freigabelage um die Schwenkachse S vorgespannt ist. Die Schenkelfeder 6 ist dabei im Bereich einer Drehlageröffnung 35 des Führungsabschnitts 32 des Führungselements 3 angeordnet, durch die sich die Lagerschraube 5 erstreckt und die das Drehlager für die Schwenkbarkeit des Führungselements 3 um die Schwenkachse S definiert.

Durch die Verstellung des Führungselements 3 in seine Freigabe ist eine Verlagerung des Akkus A in die Zwischenposition ermöglicht, in der der Akku A stirnseitig jedoch weiterhin über ein Verriegelungselement 12a der Schlosseinheit 1a der Verriegelungseinrichtung 1 an dem Unterrohr RT gehalten ist. Das Verriegelungselement 12a kann beispielsweise durch einen Verriegelungsbolzen, Verriegelungsstift oder Verriegelungsblock gebildet sein. An der Akkukappe 2 ist eine korrespondierende Schlossaussparung 22 vorgesehen, in die das jeweilige Verriegelungselement 12a formschlüssig eingreifen kann, um den Akku A in einer Zwischenposition an dem Unterrohr RT zu halten, solange die Schlosseinheit 1a nicht betätigt wurde.

Indem die Führungskulisse 20 an dem zweiten Kulissenabschnitt 201, an dem der Führungszapfen 320 des Führungselements 3 in der Freigabelage vorliegt, einen offenen Endbereich 201a ausbildet, kann der Akku A von dem Führungselement 3 abgezogen werden, wenn in der Zwischenposition des Akkus A die Schlosseinheit 1a durch Drehung des Schlüssels 10a betätigt wird und der Akku A dann nach unten (oder je nach Orientierung der Aufnahme an dem Unterrohr RT seitlich oder nach oben) heraus geklappt und von dem Unterrohr RT getrennt werden soll.

Beim Ansetzen des Akkus A an das Unterrohr RT kann der Akku A zunächst über die Schlosseinheit 1a der Verriegelungseinrichtung 1 in der Zwischenposition gehalten werden. Hierfür ist beispielsweise das Verriegelungselement 12a elastisch in Richtung eines verriegelnden Zustands vorgespannt, sodass der Akku A einfach an das Unterrohr RT gesteckt und eingeschwenkt werden kann. Bei Einschwenken des Akkus A wird über den Endbereich 201a des zweiten Kulissenabschnitts 201 die Führungskulisse 20 in Eingriff mit dem Führungszapfen 320 des Führungselements 3 gebracht und an diesem entlang verschoben. Anschließend wird durch Angriff an dem ausgeklappten Betätigungshebel 4 das Führungselement 3 um seine Schwenkachse S geschwenkt, um das Führungselement 3 aus seiner mit der Zwischenposition des Akkus A korrespondierenden Freigabelage in Richtung seiner Spannlage zu verstellen. Bei dieser Schwenkbewegung gleitet der Führungszapfen 320 in der Führungskulisse 20 und gelangt aus dem zweiten Küstenabschnitt 201 in den die rampenartig verlaufende Führungsfläche 200a aufweisenden ersten Kulissenabschnitt 200. Der Führungszapfen 320 stützt sich hierbei dann an der (in dieser Verstellrichtung) rampenartig ansteigenden Führungsfläche 200a ab und gleitet an dieser entlang. Hierdurch wird über das Führungselement 3 eine in Längsrichtung und damit Spannrichtung R1 wirkende Vorspannkraft F auf den Akku A aufgebracht. Über den L-förmigen Verlauf der Führungsöse 20 wird der Akku A ferner aus der Zwischenposition in die vorgespannte Verriegelungsposition überführt. Liegt der Akku A in der derart definierten Verriegelungsposition vor, kann der Betätigungshebel 4 um die Hebelschwenkachse D in Richtung des Akkus A eingeklappt werden.

Die durch die Führungskulisse 20 definierte Verstellbahn sieht folglich einerseits die Möglichkeit zur zweistufigen Entriegelung des Akkus A vor und gestattet andererseits eine Vorspannung des Akkus A in seiner Verriegelungsposition, wodurch eine vergleichsweise sehr stabile Fixierung des Akkus A an dem Unterrohr RT gewährleistet ist.

### Bezugszeichenliste

- 1: Verriegelungseinrichtung
- 1a: Schlosseinheit
- 10a: Schlüssel
- 11: Lagerteil
- 110: Anschlagzapfen (Anschlagelement)
- 12a: Verriegelungselement
- 2: Akkukappe (Kulissenbauteil)
- 20: Führungskulisse
- 200, 201: Kulissenabschnitt
- 200a: Führungsfläche
- 201a: Endbereich
- 21a-21d: Befestigungsloch / Befestigungsstelle
- 22: Schlossaussparung
- 3: Führungselement
- 32: Führungsabschnitt
- 320: Führungszapfen
- 34: Lagerabschnitt
- 35: Drehlageröffnung
- 4: Betätigungshebel (Betätigungselement)
- 5: Lagerschraube (Lagerelement)
- 6: Drehfeder (Federelement)
- 61, 62: Federende
- A, A': Akku (Energieversorgungseinheit)
- AS: Stirnseite
- B: Betätigungsgriff
- D: Hebelschwenkachse
- E: Elektromotor
- F: Vorspannkraft
- K: Kettenblatt
- R: Fahrradrahmen
- R1: Spannrichtung
- R2: Verlagerungsrichtung
- RT: Unterrohr (Halteelement)
- S: Schwenkachse
- ST: Anschlussstecker
- T: Tretkurbel
- α: Winkel

## Patentansprüche

1. Verriegelungseinrichtung zur Verriegelung einer Energieversorgungseinheit (A) für ein Fahrrad, mit einem Halteelement (RT), an dem die Energieversorgungseinheit (RT) festzulegen ist, wobei die Verriegelungseinrichtung (1) eingerichtet ist,
- die Energieversorgungseinheit (A) an dem Halteelement (RT) in einer Verriegelungsposition zu verriegeln,
- für eine Trennung der Energieversorgungseinheit (A) von dem Halteelement (RT) eine Verlagerung der Energieversorgungseinheit (A) aus der Verriegelungsposition in eine Zwischenposition zu gestatten, in der die aus der Verriegelungsposition verlagerte Energieversorgungseinheit (A) über mindestens ein Verriegelungselement (12a) der Verriegelungseinrichtung (1) weiterhin an dem Halteelement (RT) gehalten ist, und
- die in der Zwischenposition befindliche Energieversorgungseinheit (A) freizugeben, wenn die Energieversorgungseinheit (A) von dem Halteelement (RT) getrennt werden soll,
**dadurch gekennzeichnet, dass**
die Verriegelungseinrichtung (1) ein zwischen einer Spannlage und einer Freigabelage verstellbares Führungselement (3) aufweist,
- über das in seiner Spannlage entlang einer Spannrichtung (R1) eine Spannkraft (F) auf die in der Verriegelungsposition befindliche Energieversorgungseinheit (A) aufbringbar ist und
- das mit einer Verstellung aus der Spannlage in seine Freigabelage eine Verlagerung der Energieversorgungseinheit (A) aus der Verriegelungsposition in die Zwischenposition entlang einer unter einem Winkel (α) zu der Spannrichtung (R1) verlaufenden Verlagerungsrichtung (R2) ermöglicht.

2. Verriegelungseinrichtung nach Anspruch 1, **dadurch gekennzeichnet, dass** über das in seiner Spannlage vorliegende Führungselement (3) eine Spannkraft (F) entlang einer Spannrichtung (R1) aufbringbar ist, die im Wesentlichen parallel zu einer Längserstreckungsrichtung verläuft, entlang der sich die Energieversorgungseinheit (A) in ihrer Verriegelungsposition erstreckt.

3. Verriegelungseinrichtung nach Anspruch 1 oder 2, **dadurch gekennzeichnet, dass** das Führungselement (3) zwischen seiner Spannlage und seiner Freigabelage kulissengeführt verstellbar ist.

4. Verriegelungseinrichtung nach Anspruch 3, **dadurch gekennzeichnet, dass** ein Abschnitt (320) des Führungselements (3) an einer Führungskulisse (20) gehalten ist, die dem Führungselement (3) eine Verstellbahn für eine Verstellung zwischen der Spannlage und der Freigabelage vorgibt.

5. Verriegelungseinrichtung nach Anspruch 4, **dadurch gekennzeichnet, dass** die Führungskulisse (20) an einem Kulissenbauteil (2) ausgebildet ist, das an der Energieversorgungseinheit (A) fixierbar ist.

6. Verriegelungseinrichtung nach Anspruch 4 oder 5, **dadurch gekennzeichnet, dass** die Führungskulisse (20) eine rampenartig verlaufende Führungsfläche (200a) aufweist, über die bei einer Führung des Abschnitts des Führungselements (3) an der Führungsfläche (200a) entlang die Spannkraft (F) auf die Energieversorgungseinheit (A) erzeugbar ist.

7. Verriegelungseinrichtung nach einem der Ansprüche 4 bis 6, **dadurch gekennzeichnet, dass** die Führungskulisse (20) einen L-förmigen Verlauf aufweist.

8. Verriegelungseinrichtung nach einem der Ansprüche 4 bis 7, **dadurch gekennzeichnet, dass** die Führungskulisse (20) einen Führungskanal definiert, in den der an der Führungskulisse (20) gehaltene Abschnitt (320) des Führungselements (3) eingreift und der einen in einer Längserstreckungsrichtung des Führungskanals offenen Endbereich (201a) aufweist, an dem der Abschnitt (320) des Führungselements (3) in die Führungskulisse (20) einführbar ist.

9. Verriegelungseinrichtung nach einem der vorhergehenden Ansprüche, **dadurch gekennzeichnet, dass** an dem Führungselement (3) ein Betätigungselement (4) vorgesehen ist, das für die Einleitung einer Verstellkraft in das Führungselement (3) zur Verstellung zwischen der Spannlage und der Freigabelage vorgesehen ist.

10. Verriegelungseinrichtung nach Anspruch 9, **dadurch gekennzeichnet, dass** das Betätigungselement (4) an dem Führungselement (3) verstellbar, insbesondere schwenkbar gelagert ist.

11. Verriegelungseinrichtung nach einem der vorhergehenden Ansprüche, **dadurch gekennzeichnet, dass** das Führungselement (3) über mindestens ein Federelement (6) in Richtung seiner Freigabelage vorgespannt ist.

12. Fahrradrahmen für ein Fahrrad, insbesondere ein Elektrofahrrad, mit einer Verriegelungseinrichtung (1) nach einem der vorhergehenden Ansprüche und einer Energieversorgungseinheit (A), die an einem Halteelement (RT) des Fahrradrahmens (R) festgelegt ist.

13. Elektrofahrrad mit einer Verriegelungseinrichtung nach einem der Ansprüche 1 bis 11.

## Claims

1. A locking device for locking an energy supply unit (A) for a bicycle, comprising a holding element (RT) to which the energy supply unit (A) is to be fixed, wherein the locking device (1) is configured
- to lock the energy supply unit (A) to the holding element (RT) in a locking position,
- for a separation of the energy supply unit (A) from the holding element (RT), to permit a movement of the energy supply unit (A) from the locking position into an intermediate position in which the energy supply unit (A) moved out of the locking position continues to be held on the holding element (RT) via at least one locking element (12a) of the locking device (1), and
- to release the energy supply unit (A) disposed in the intermediate position, when the energy supply unit (A) is to be separated from the holding element (RT),
**characterized in that**
the locking device (1) includes a guide element (3) adjustable between a clamping position and a release position,
- via which, in its clamping position, a clamping force (F) can be applied along a clamping direction (R1) onto the energy supply unit (A) disposed in the locking position, and
- which, by an adjustment from the clamping position into its release position, provides for a movement of the energy supply unit (A) from the locking position into the intermediate position along a direction of movement (R2) extending at an angle (α) to the clamping direction (R1).

2. The locking device according to claim 1, **characterized in that** via the guide element (3) disposed in its clamping position a clamping force (F) can be applied along a clamping direction (R1) which extends substantially parallel to a direction of longitudinal extension, along which the energy supply unit (A) extends in its locking position.

3. The locking device according to claim 1 or 2, **characterized in that** the guide element (3) is adjustable between its clamping position and its release position link guided.

4. The locking device according to claim 3, **characterized in that** a portion (320) of the guide element (3) is retained on a guide link (20) that specifies the adjustment path of the guide element (3) for an adjustment between the clamping position and the release position.

5. The locking device according to claim 4, **characterized in that** the guide link (20) is formed on a slotted link component (2) that can be fixed on the energy supply unit (A).

6. The locking device according to claim 4 or 5, **characterized in that** the guide link (20) has a ramp-like guide surface (200a) via which the clamping force (F) acting on the energy supply unit (A) can be generated when the portion of the guide element (3) is guided along the guide surface (200a).

7. The locking device according to any of claims 4 to 6, **characterized in that** the guide link (20) has an L-shaped design.

8. The locking device according to any of claims 4 to 7, **characterized in that** the guide link (20) defines a guide channel into which the portion (320) of the guide element (3) retained on the guide link (3) engages and which includes an end region (201a) that is open in a direction of longitudinal extension of the guide channel and on which the portion (320) of the guide element (3) can be introduced into the guide link (20).

9. The locking device according to any of the preceding claims, **characterized in that** on the guide element (3) an actuating element (4) is provided, which is intended for the introduction of an adjusting force into the guide element (3) for adjustment between the clamping position and the release position.

10. The locking device according to claim 9, **characterized in that** the actuating element (4) is adjustable, in particular pivotally mounted, on the guide element element (3).

11. The locking device according to any of the preceding claims, **characterized in that** the guide element (3) is pretensioned in the direction of its release position via at least one spring element (6).

12. A bicycle frame for a bicycle, in particular an electric bicycle, comprising a locking device (1) according to any of the preceding claims and an energy supply unit (A) that is fixed to a holding element (RT) of the bicycle frame (R).

13. An electric bicycle with a locking device according to any of claims 1 to 11.

## Revendications

1. Dispositif de verrouillage pour le verrouillage d'une unité d'alimentation en énergie (A) pour une bicyclette, avec un élément de retenue (RT), sur lequel l'unité d'alimentation en énergie (RT) est à fixer, dans lequel le dispositif de verrouillage (1) est conçu
- pour verrouiller l'unité d'alimentation en énergie (A) sur l'élément de retenue (RT) dans une position de verrouillage,
- pour une séparation de l'unité d'alimentation en énergie (A) de l'élément de retenue (RT) pour permettre un déplacement de l'unité d'alimentation en énergie (A) à partir de la position de verrouillage dans une position intermédiaire, dans laquelle l'unité d'alimentation en énergie (A) déplacée à partir de la position de verrouillage continue d'être retenue sur l'élément de retenue (RT) par l'intermédiaire d'au moins un élément de verrouillage (12a) du dispositif de verrouillage (1), et
- pour libérer l'unité d'alimentation en énergie (A) se trouvant dans la position intermédiaire, lorsque l'unité d'alimentation en énergie (A) vise à être séparée de l'élément de retenue (RT),
**caractérisé en ce que**
le dispositif de verrouillage (1) présente un élément de guidage (3) réglable entre une position de serrage et une position de libération,
- par l'intermédiaire duquel dans sa position de serrage le long d'une direction de serrage (R1) une force de serrage (F) peut être appliquée sur l'unité d'alimentation en énergie (A) se trouvant dans la position de verrouillage et
- qui avec un réglage à partir de la position de serrage dans sa position de libération permet un déplacement de l'unité d'alimentation en énergie (A) à partir de la position de verrouillage dans la position intermédiaire le long d'une direction de déplacement (R2) s'étendant selon un angle (α) par rapport à la direction de serrage (R1).

2. Dispositif de verrouillage selon la revendication 1, **caractérisé en ce que** par l'intermédiaire de l'élément de guidage (3) présent dans sa position de serrage une force de serrage (F) peut être appliquée le long d'une direction de serrage (R1), qui s'étend sensiblement parallèlement à une direction d'étendue longitudinale le long de laquelle l'unité d'alimentation en énergie (A) s'étend dans sa position de verrouillage.

3. Dispositif de verrouillage selon la revendication 1 ou 2, **caractérisé en ce que** l'élément de guidage (3) est réglable de manière guidée par coulisse entre sa position de serrage et sa position de libération.

4. Dispositif de verrouillage selon la revendication 3, **caractérisé en ce qu'**une partie (320) de l'élément de guidage (3) est retenue sur une coulisse de guidage (20), qui indique à l'élément de guidage (3) une voie de réglage pour un réglage entre la position de serrage et la position de libération.

5. Dispositif de verrouillage selon la revendication 4, **caractérisé en ce que** la coulisse de guidage (20) est réalisée sur une pièce de coulisse (2), qui peut être fixée sur l'unité d'alimentation en énergie (A).

6. Dispositif de verrouillage selon la revendication 4 ou 5, **caractérisé en ce que** la coulisse de guidage (20) présente une surface de guidage (200a) s'étendant à la façon d'une rampe, par l'intermédiaire de laquelle lors d'un guidage de la partie de l'élément de guidage (3) le long de la surface de guidage (200a) la force de serrage (F) peut être produite sur l'unité d'alimentation en énergie (A).

7. Dispositif de verrouillage selon l'une quelconque des revendications 4 à 6, **caractérisé en ce que** la coulisse de guidage (20) présente un tracé en forme de L.

8. Dispositif de verrouillage selon l'une quelconque des revendications 4 à 7, **caractérisé en ce que** la coulisse de guidage (20) définit un canal de guidage, dans lequel s'insère la partie (320) de l'élément de guidage (3) retenue sur la coulisse de guidage (20) et qui présente une zone d'extrémité (201a) ouverte dans une direction d'étendue longitudinale du canal de guidage, sur laquelle la partie (320) de l'élément de guidage (3) peut être introduite dans la coulisse de guidage (20).

9. Dispositif de verrouillage selon l'une quelconque des revendications précédentes, **caractérisé en ce qu'**un élément d'actionnement (4), qui est prévu pour l'introduction d'une force de réglage dans l'élément de guidage (3) pour le réglage entre la position de serrage et la position de libération, est prévu sur l'élément de guidage (3).

10. Dispositif de verrouillage selon la revendication 9, **caractérisé en ce que** l'élément d'actionnement (4) est monté de manière réglable, en particulier de manière pivotante, sur l'élément de guidage (3).

11. Dispositif de verrouillage selon l'une quelconque des revendications précédentes, **caractérisé en ce que** l'élément de guidage (3) est précontraint en direction de sa position de libération par l'intermédiaire d'au moins un élément ressort (6).

12. Cadre de bicyclette pour une bicyclette, en particulier une bicyclette électrique, avec un dispositif de verrouillage (1) selon l'une quelconque des revendications précédentes et une unité d'alimentation en énergie (A), qui est fixée sur un élément de retenue (RT) du cadre de bicyclette (R).

13. Bicyclette électrique avec un dispositif de verrouillage selon l'une quelconque des revendications 1 à 11.
